# EUROPEAN PATENT APPLICATION

(11) **EP 2 248 923 A1**
(43) Date of publication of application: **10.11.2010**
(21) Application number: 09005851.2
(22) Date of filing: 27.04.2009
(51) Int. Cl.: C22C 19/05, B23K 35/30, F01D 5/00

(54) **Nickel base y/ý superalloy with multiple reactive elements and use of said superalloy in complex material systems**

(71) Applicant: Siemens Aktiengesellschaft, 80333 München (DE)
(72) Inventor: Hasselqvist, Magnus, 61243 Finspong (SE)

(57) **Abstract**

The present invention relates to a nickel-base γ/γ' superalloy with a unique blend of at most moderate cost, high oxidation resistance, high hot corrosion resistance, moderate strengthening, adequate alloy stability, and comparatively good weldability. The said alloy comprises: Up to 20 wt% of the sum of Co and Fe,
between 17 and 21 wt% Cr,
between 0.5 and 3 wt% of the sum of Mo and W,
at most 2 wt% Mo,
between 4.8 and 6 wt% A1,
between 1.5 and 5 wt% Ta,
between 0.01 and 0.2 wt% of the sum of C and B,
between 0.01 and 0.2 wt% Zr,
between 0.05 and 1.5 wt% Hf,
between 0.05 and 1.0 wt% Si, and
between 0.01 and 0.5 wt% of the sum of rare earths such as Sc, Y, the actinides and the lanthanides, such that at least two of these rare earths are present in the alloy, and no more than 0.3 wt% of any of these rare earths.

It further relates to its use in hot components such as, but not restricted to, blades, vanes, heat shields, sealings and combustor parts in gas turbines. It further relates to its use as filler alloy for repair welding and/or cladding of such hot components. It further relates to its use as protective coating and/or bond coat in a TBC system on such hot components. It further relates to its dual use as coating and/or bond coat, and, for repair and/or cladding on such hot components. It further relates to its use as intermediate layer between the base alloy and another coating and/or bond coat on such hot components. It further relates to its use in polycrystalline, directionally solidified or single crystal form in such components. It further relates to its production by processes such as, but not restricted to, precision casting, laser welding/cladding, hot box welding, laser sintering, cold spraying, explosion welding and vacuum plasma spraying. It further relates to its production by low S processing. It further relates to its use as part of material systems as exemplified above produced by low S processing.

## Description

### Technical background

Nickel-base γ/γ' superalloys are essential for critical components in aero and land based gas turbines, but are used also in other applications. The difference between said superalloys depend on the level of knowledge and production technology available at the time they were developed, and, on different relative emphasis on properties such as cost, oxidation resistance, corrosion resistance, strengthening, alloy stability, ductility, weldability and compatibility with other alloys in complex material systems.

Nickel-base γ/γ' superalloys are used in single crystal, directionally solidified or equiaxed form. In each crystal there is a γ matrix which is essentially Ni with elements like Co, Cr, Mo, W and Re in solid solution, and, γ' particles which are essentially Ni3A1 with elements like Ta, Ti, Nb and V in solid solution. Grain boundaries, if present, are usually decorated by carbides and/or borides which provide cohesive strength. Zr also contributes to grain boundary cohesion. Grain boundaries in directionally solidified components are usually protected by significant additions of Hf. Zr and Hf can also contribute to the reactive element effect for improved cyclic oxidation resistance. Reactive element effects can also be obtained from Si and rare earths.

Elements like Mo, W and Re provide solution strengthening of the γ matrix, and, Ta, Ti, Nb and V provide solution strengthening of the γ' particles. Al provides strengthening as it increases the amount of γ' particles, and increases the concentration of Mo, W and Re in the γ matrix.

Nickel-base γ/γ' superalloys can seldom be regarded as low cost, but, if the levels of expensive elements such as W and Ta are kept moderate, and the levels of very expensive elements such as Re, Ru and noble metals like Pt are kept very low or are excluded, the cost can be regarded as moderate in context.

In the context of hot components in e.g. gas turbines it is generally accepted that excellent oxidation resistance require the ability to form a very adherent and continuous low permeability AL203 scale.

[Barrett] teaches that the ability to form a continuous Al2O3 scale is provided by Al, enhanced by Cr and Ta, somewhat reduced by Mo and W, and significantly reduced by Ti, Nb and V. This implies that less Al is needed to form such an Al2O3 scale if the levels of Cr and Ta are increased, or, the levels of Ti, Nb and V are reduced.

[Sarioglu] teaches that the scale adherence is severely reduced by tramp elements, especially S, but, that this effect can be neutralized by a combination of clean casting and addition of small measured levels of reactive elements such as Hf, Zr and rare earths. He also teaches that a detrimental effect of S is associated with its tendency to diffuse to the metal/scale interphase which is then weakened.

[Pint 1] underlines the importance of S, and further teaches the beneficial RE effects when small levels of Hf and the rare earth Y are combined.

[Harris] teaches that the combination of the two rare earths La and Y provide more cyclic oxidation resistance than when Y or La are used separately. He also teaches that while Y is the most commonly used rare earth, it may not always be the most efficient, and that Ce can be very efficient.

[Pint 2] teaches that Ce, Gd, Sm, Tb, Nd and La were more effective than e.g. Hf, Zr and Y for improvement of oxide scale adherence at the same level of concentration.

[Caron 1] teaches the beneficial reactive element effects when small levels of Hf and Si are combined.

[Pint 3] teaches that excellent reactive element effects can be obtained when multiple reactive elements are used, one example being the excellent cyclic oxidation resistance seen in tests on Haynes-214 which contained small measured levels of Zr, Si and Y. Excellent cyclic oxidation resistance was also seen in Rene-N5 which contained small levels of Hf, Zr, Si and Y.

[Aimone] teaches that only about 10% of the rare earth additions are typically retained during master heat casting, due to evaporation or reaction with surrounding materials. He further teaches that addition of 20 ppm Y was not effective, additions in the 200-500 ppm range very effective, and additions in the 1000-2000ppm range less effective, implying that retained Y levels in the alloy in the 20-50 ppm range were very effective, and, that too high retained levels of rare earths are not optimal.

One conclusion is that surprisingly low levels of Al are needed to form a continuous Al2O3 scale when supported by adequate levels of elements such as Cr, Ta and Si, provided that too high levels of deleterious elements like Ti and Nb are avoided. Another conclusion is that excellent scale adherence requires a combination of a low S production process and multiple reactive elements from the group of Hf, Zr, Si and rare earths. The rare earths should be used at small retained measured levels and it is advantageous to use at least two. Also, the initial rare earth composition must be chosen on the basis of the retention for the particular production process used.

Corrosion resistance is provided by Cr. Less than 12 wt% Cr is regarded as poor, at least 12 wt% Cr as moderate, at least 16 wt% Cr as good, and at least 20 wt% Cr as excellent.

[Goldschmidt] teaches that the hot corrosion resistance of the alloy SC16 with 16 wt% Cr and 3 wt% Mo is significantly inferior to the well-known alloy IN738LC with 16 wt% Cr and 1.8 wt% Mo. IN738LC is generally recognized as having a good corrosion resistance. Therefore a restriction to at most 2 wt% Mo in a new alloy seems prudent, and we would like to have at least 16 wt% Cr, preferably with some margin as we are possibly entering an era where relatively corrosive fuels, e.g. certain bio-fuels, will be utilized.

High strength base alloys typically use in the order of 4 to 10 wt% Mo+W+Re for matrix strengthening, and in the order of 4-10 wt% Ti+Ta+Nb for strengthening of the γ' particles, and contain between 40 and 70 vol% γ' particles. IN738LC contains about 43 vol% particles, 4.4 wt% Mo+W and 6.2 wt% Ti+Ta+Nb. In contrast, low strength alloys such as Haynes-214, which is still equivalent in strength to traditional weld filler alloys such as IN625, contain no strengthening of the matrix or the particles, and the γ' particle content is small or zero at high service temperatures. In this context, a moderate strengthening level is taken to be a γ' content in the 30-50 vol% range and in the range of 2 to 8 wt% of the sum of matrix and particle strengthening elements.

If the concentration of Cr, Mo, W and Re in the γ matrix is too high, phases like α Cr, or, topologically close packed phases will form directly or in service. Thus, an increased γ' content, or, increased Mo, W or Re levels, must be accompanied by a reduction in Cr content if extensive precipitation of such phases is to be avoided. One particular effect of such phase precipitation is a reduction in creep strength, and phase stability has therefore been an important subject for base alloy design. In addition, extensive phase precipitation may cause loss of ductility, said phases are often known as brittle phases. It should be noted that stability may be even more important for alloys in complex materials systems due to the interdiffusion which might locally increase the concentration of alloy additions as described above.

[Caron 2] teaches that the risk for precipitation of brittle phases for an alloy can be estimated through comparison of the Md value for this alloy and a relatively similar alloy with known TCP risks. For the alloys discussed here, the Md value can be calculated from
Md = 0.717aNi+0.777aCo+1.142aCr+1.267aRe+1.55aMo+ 1.655aW+1.9aAl+1.9aSi+2.117aNb+2.224aTa+2.271aTi+3.02aHf
wherein a Co is the content of Co in atom% etc. In context, good stability is taken to be better than for IN738LC as calculated by this forumula.

[Yeh] teaches that Si partitions preferably to the γ' phase such that the γ' content is increased, implying that any addition of significant levels of Si to an initially stable alloy must be balanced by a reduction in the levels of Al, Cr or the strengthening elements to avoid significant brittle phase precipitation.

Classical coating alloys tend to be based on β and γ/β phase structures which provide high Al reservoirs. The β phase is essentially NiAl. The problem with these alloys is that their brittleness implies that they are normally only used as a thin layer. Therefore, they are sensitive to interdiffusion with the base alloy, e.g. through loss of Al due to diffusion to low Al base alloys and/or reduction of oxidation resistance due to interdiffusion of Ti from the base alloy into the coating. Recently, strengthening elements have been added to these classical coatings alloys to retard the interdiffusion rates, typically using Re, Ru and Ta additions. [Subramanian] teaches that the Re additions in SiCoat2464 significantly increases the oxidation resistance thanks to a reduced rate of Al interdiffusion.

In comparison with classical coating alloys, almost all γ/γ' superalloys will provide good ductility, provided extensive levels of e.g. brittle phases, eutectics, casting porosity and weld-cracking are avoided.

It should also be mentioned that some overlay coating alloys based on the γ/γ' structure have been developed, often with emphasis on corrosion resistance using high Cr and Si levels, and, recent developments also include some strengthening element additions.

It should also be mentioned that coating alloys based on the γ/γ' structure with noble elements like Pt added for strengthening and oxidation resistance have been developed, see e.g. [Zhang].

Whenever an alloy may be used in a material system which includes an aluminide, it is important for the alloy to be compatible with said aluminide.

[Vedula] teaches that small additions of Hf to NiAl result in significantly improved creep strength.[Tolpygo] teaches that Hf in the base alloy will diffuse into an applied aluminide coating and reduce the rumpling of the coating surface such that the oxide scale adherence is increased, which can be interpreted as an effect of the improved creep strength when Hf is added to NiAl.

It should also be mentioned that rumpling increases the surface roughness, and hence also the heat transfer coefficient of a surface, and that this can also lead to accelerated oxidation attack.

Welding and cladding of hot components has typically been done using γ based alloys or IN625 as fillers. Technology such as laser welding then enabled e.g. the use of IN738LC based filler alloys for the IN738LC base alloy. Recently, filler alloys based on high Al, high strength, high γ' content alloys have been introduced for e.g. repair of oxidation damage. [Fujita] teaches that a filler alloy based on Rene-142 could be used for laser weld repair of CMSX-4 such that the single crystal structure of the latter was preserved. Both alloys have γ' contents in the 60-70 vol% range.

In the context of filler alloys with high oxidation resistance, we therefore regard an alloy with 40-50 vol% γ' and moderate strengthening as having good weldability, and it should be obvious to those skilled in the art that the use of such filler alloys would be less difficult and costly as the use of alloys such as Rene-142.

It should also be mentioned that internal work has shown that many typical damage cases do not require repair using filler alloys with Rene-142 level strength. Simulations were e.g. performed on a first stage blade made in CMSX-4, with increased hot gas temperatures relative to real engine conditions to simulate future upgrades. Further, to simulate weld-repair of oxidation damage on this particular squealer tip, the creep rate (for given levels of stress and temperature) was increased by a factor of 100 on said tip relative to CMSX-4, but no excessive creep resulted thanks to the low creep loads on said tip.

The dual use of an alloy for coating and repair would make the repair and refurbishment process easier and less costly. More of the coating alloy would be added where needed, including where the coating has been consumed and some of the substrate lost, in which case the coating alloy is used to rebuild the component to produce the necessary geometry.

Consider also a hot component such as a gas turbine first stage vane made in a [low Al high Ti] alloy like IN939. A common problem is local overheating on the platforms, and classical coating systems tend to provide a quite limited life due to interdiffusion with the [low Al high Ti] substrate. The ability to increase the thickness from standard levels to, say, 2 mm in the locally hot area, i.e. to apply cladding, would significantly increase the component life. Application of e.g. a PtAl coating on top could then be used to further increase this component life. In such areas, the full creep strength of the substrate is not necessary, but, some creep strength is still useful to resist erosion and rumpling of the surface due to the high velocity hot gas stream, because increased surface roughness implies higher heat transfer into the component, and thus an accelerated oxidation process.

### State of the art

Early development of γ/γ' superalloys resulted in alloys such as U-700 which has a composition, in wt%, given by Ni-17Co-15Cr-4.5Mo-4.3Al-3.5Ti-0.07Zr-0.08C. U-700 can form a continuous Al2O3 scale with 4.3 wt% Al thanks to 15 wt% Cr and despite 3.5 wt% Ti. These alloys have less hot corrosion resistance than suggested by their Cr levels due to their high levels of Mo, the main strengthening element in use at the time they were developed. Their γ' contents are in the 45 to 55 vol% range.

One line of subsequent alloy development led to alloys such as IN939, IN738LC and IN792, and this class of alloys remains the norm in land based gas turbines to this day. IN939 has a composition, in wt%, given by Ni-19Co-22Cr-2W-2Al-3.7Ti-1.4Ta-1Nb-0.1Zr-0.15C-0.01B. That of IN738LC is Ni-8.5Co-16Cr-1.8Mo-2.6W-3.4Al-3.4Ti-1.8Ta-0.9Nb-0.09Zr-0.08C-0.01B. That of IN792 is Ni-9Co-12.5Cr-1.8Mo-4.2W-3.4Al-4.2Ti-4.2Ta-0.08C-0.015B.

Compared to alloys such as U-700, Mo is partly replaced by W for improved corrosion resistance, and, Al is partly replaced by Ti, Nb and Ta for improved creep strength through increased strengthening of the γ' particles. In particular, these alloys contain high Ti levels.

Their hot corrosion resistance range from excellent in IN939, good in IN738LC to moderate in IN792 depending on their Cr contents. These alloy do not have the capability to form a continuous Al2O3 scale, thus they do not provide good oxidation resistance. The γ' particle contents are typically in the 30-55 vol% range. Improved knowledge allowed alloy designers to handle phase stability better than for the old alloys above. The creep strength varies from moderate in alloys like IN939 to high in alloys like IN792.

Another line of subsequent alloy development led to alloys such as Mar M-247 which has a composition, in wt%, given by Ni-10Co-8Cr-0.7Mo-10W-5.65Al-1Ti-3Ta-1.5Hf-0.15C. The introduction of directional solidification led to derivative alloys such as CM247DS, and single crystal casting led to derivative alloys such as Rene N5 and CMSX-4 which have compositions, in wt%, given by Ni-7.5Co-7Cr-1.5Mo-5W-3Re-6.1Al-6.5Ta-0.1Hf-0.05C and Ni-9Co-6.5Cr-0.6Mo-6.5W-3Re-5.65A1-1Ti-6.5Ta-0.1Hf respectively.

The corrosion resistance in this class of alloys is poor due to their very low Cr levels. Their high Al levels supported by moderate to high Ta levels, allow them to form continuous Al2O3 scales despite their very low Cr levels. Recently, significant work has been done to enhance their oxidation resistance and coating compatibility via clean casting and use of reactive element effects. Their weldability is poor due to their very high γ' contents in the 60 to 75 vol% range. Care has been taken to achieve good alloy stability to avoid reduction of creep strength. Their creep strengths range from high in alloys such as Mar M-247 to very high in alloys such as Rene N5 and CMSX-4

Outside these three main classes, there are some specialized alloys of interest. Haynes-214 has a basic composition in wt% given by Ni-3Fe-16Cr-4.5Al and also contains small levels of Zr, Si and Y to provide reactive element effects. It combines good corrosion resistance, excellent oxidation resistance and high weldability. The creep strength is comparatively poor because it contains no strengthening elements.

Two patent applications have recently been disclosed. These alloys can to some extent be viewed as derivatives of U-700 in which Mo has been at least partly replaces by W, and Ti has been at least partly replaced by Ta:
Patent application EP20060021724 discloses an alloy with at least 12 wt% Cr, at least 4 wt% Al, at least 7.5 wt% Ta and at least 3 wt% of the sum of matrix strengthening elements Mo+W+Re. This implies that it is a high strength alloy, and, consequently we cannot assume good weldability in the sense described above.
Patent application 2008P02248WO discloses an alloy with between 17 and 21 wt% Cr, between 4.0 and 4.7 wt% Al, and moderate levels of matrix and particle strengthening elements. This is likely to have most of the properties of the present invention, but even a moderate loss of Al would reduce an oxidation resistance which otherwise might have been excellent. A typical embodiment is STAL18 with a composition, in wt%, Ni-5Co-18Cr-0.8Mo-2.5W-4.4Al-4.4Ta-0.03C-0.03Zr-0.005B-0.1Hf-0.1Si-0.02Ce

One typical example of γ/γ' based coatings is SV-20 with a nominal composition, in wt%, of Ni-25Cr-2.7Si-5.5Al-0.5Y-1Ta. Because of the high Cr content and the relatively high γ' content caused by these Al and Si levels, the γ/γ' structure is not stable. Patent EP1426759 teaches that SV-20 has an equilibrium content of -20 vol% α-Cr below 900°C, and that thermal cycling between room temperature and temperatures above 900°C will result in solutioning, re-precipitation, and some levels of non-equilibrium products.

### Description of the invention

The objective with the present invention is to provide a nickel-base γ/γ' superalloy with a unique blend of moderate cost, excellent oxidation resistance, good corrosion resistance, moderate strength, good stability, good ductility, good weldability, good compatibility with aluminide coatings, and a margin against moderate loss of Al in complex material systems.

A further objective is its use in hot components such as, but not restricted to, blades, vanes, heat shields, sealings and combustor parts in gas turbines. A further objective is its use as filler alloy for repair welding and/or cladding of such hot components. A further objective is its use as protective coating and/or as bond coat in a TBC system on such hot components. A further objective is its dual use as coating and/or bond coat, and, for repair and/or cladding on such hot components. A further objective is its use as intermediate layer between the base alloy and another coating and/or bond coat on such hot components. A further objective is its use in polycrystalline, directionally solidified or single crystal form in such components. A further objective is its production by processes such as, but not restricted to, precision casting, laser welding/cladding, hot box welding, laser sintering, cold spraying, explosion welding and vacuum plasma spraying. A further objective is its production by low S processing. A further objective is its use as part of material systems as exemplified above produced by low S processing.

While the alloy disclosed in this invention does not have the strength necessary for its use as base alloy in highly loaded areas of hot components, as needed to e.g. avoid excessive elongation of gas turbine blades, its strength is sufficient for many hot components, and, for large areas of most hot components, e.g. on platforms and blade tips. The alloy is therefore useful for e.g. manufacturing of many hot components and cladding or repair of most hot components, thanks to the range of other properties described above.

The composition of this invention is based on the following idea: Good corrosion resistance and stability require at most a moderate level of γ' particles and at most moderate levels of strengthening elements to allow for a high Cr content without extensive brittle phase precipitation. This also implies good ductility and weldability. At the same time, excellent oxidation resistance require formation of a continuous and very adherent Al2O3 scale, and this must be achieved despite the restriction on the γ' content, and therefore on the Al content, and the fact that there must be at least some strengthening of the γ' particles which also adds to the γ' content. The solution is to rely on Ta which is beneficial for the oxidation resistance rather than the deleterious elements Ti, Nb or V for strengthening of the γ' particles, and, to utilize clean production methodology and multiple reactive elements, to make up for a comparatively moderate Al level.

The dual use as coating and filler alloy is possible thanks to the comparatively good ductility associated with the γ/γ' structure. This is likely to be significantly more difficult with classical β phase based brittle coating alloys. It could in theory be done with γ/γ' coatings strengthened by noble elements, but the cost would be significantly higher. It might be possible with γ/γ' coatings such as SV-20, but, we would prefer to avoid the uncertainties associated with the lack of alloy stability in such coating alloys, especially as there may be further enrichment of brittle phase forming elements due to interdiffusion in complex material systems.

### Detailed description of the invention

Cobalt levels up to 20 wt% are generally utilized in nickel-base γ/γ' superalloys, and it seems reasonable to allow for the same variation to e.g. allow for embodiments matched against different base alloys. Fe additions are less common, but moderate Fe additions are used in e.g. the highly oxidation resistant alloy Haynes-214.

It should be clear to those skilled in the art through comparison with e.g. IN738LC that 17 to 21 wt% Cr should be sufficient to provide good hot corrosion resistance considering that the levels of deleterious elements in general, and Mo in particular, are restricted.

Moderate strengthening of the matrix elements is provided by between 0.5 and 3 wt of Mo+W, with a limit to at most 2 wt% Mo to preserve the good hot corrosion resistance provided by the high Cr content.

The oxidation resistance is based on 4.8 to 6 wt% Al. While 4.8 wt% Al is low compared to e.g. β phase based coating alloys and oxidation resistant blade alloys like e.g. CM247CC, Haynes-214 shows that 4.5 wt% can be sufficient for excellent cyclic oxidation resistance when supported by high levels of Cr and an appropriate multiple reactive element recipe. The lower Al limit is set a bit above the 4.5 wt% used in Haynes-214 to provide some margin against interdiffusion effects when the alloy is used in material systems as described above. More than 6 wt% Al is not compatible with the Cr levels needed for good hot corrosion resistance given the requirement on adequate phase stability.

Moderate strengthening of the γ' particles is provided by between 1.5 and 5 wt% Ta.

C+B levels of up to 0.2 wt% are commonly used for grain boundary strengthening, and even when the alloy is used in single crystal form it is advantageous to include at least 0.01 wt% for low angle boundary tolerance.

The Zr content should be at least 0.01 wt% to contribute to multiple reactive element doping, and can be up to 0.2 wt% to e.g. contribute to grain boundary strengthening.

The Hf content should be at least 0.05 wt% to contribute to multiple reactive element doping, and can be up to 1.5 wt% to contribute to e.g. rumpling resistance of an applied aluminide coating, or, for grain boundary strengthening when the alloy is used in directionally solidified form.

The Si content should be at least 0.05 wt% to contribute to multiple reactive element doping, but can be up to 1.0 wt% to e.g. improve the corrosion resistance. A limit on 1 wt% is set to avoid unstable alloy behavior.

The sum of rare earths should be at least 0.01 wt% to provide an appropriate level of retained rare earths after the production process when said production process has a high degree of rare earth retention. The sum of rare earths may have to be up to 0.5 wt% to provide an appropriate level of retained rare earths after the production process when said production process has a low degree of rare earth retention.

The compositions disclosed here relates to the stage in the production chain prior to the actual application, which could be e.g. casting of a component from bar stock, vacuum plasma spraying from powder, or laser welding from powder, except in the case of cold spraying and similar non-melting processes in which it relates to the stage before the last melting prior to said cold spraying or a similar process.

According to one embodiment of the invention the alloy may include up to 20 wt% of Co+Fe, between 17 and 21 wt% Cr, between 0.5 and 3 wt% of Mo+W, at most 2 wt% Mo, between 4.8 and 6 wt% Al, between 1.5 and 5 wt% Ta, between 0.01 and 0.2 wt% of C+B, between 0.01 and 0.2 wt% Zr, between 0.05 and 1.5 wt% Hf, between 0.05 and 1.0 wt% Si, and between 0.01 and 0.5 wt% of the sum of rare earths such that at least two rare earths are present, and at most 0.3 wt% of any rare earth is present.

Additionally, the alloy may include up to 20 wt% of Co+Fe, between 17 and 21 wt% Cr, between 0.5 and 3 wt% of Mo+W, at most 2 wt% Mo, between 4.8 and 6 wt% Al, between 1.5 and 5 wt% Ta, between 0.01 and 0.2 wt% of C+B, between 0.01 and 0.2 wt% Zr, between 0.05 and 1.5 wt% Hf, between 0.05 and 1.0 wt% Si, and between 0.01 and 0.5 wt% of the sum of rare earths such that at least two rare earths are present, and at most 0.3 wt% of any rare earth is present, and Y present only as an unavoidable impurity.

Alternatively, the alloy may include between 2 and 8 wt% Co, between 17 and 19 wt% Cr, between 1 and 2.2 wt% W, between 4.8 and 5.8 wt% Al, between 2 and 4.5 wt% Ta, between 0.01 and 0.1 wt% of C+B, between 0.02 and 0.08 wt% Zr, between 0.1 and 0.5 wt% Hf, between 0.05 and 0.4 wt% Si, and between 0.02 and 0.2 wt% of the sum of rare earths of which at least two are present.

Additionally, the alloy may include between 4.5 and 5.5 wt% Co, between 18.2 and 19 wt% Cr, between 1.4 and 1.8 wt% W, between 5.2 and 5.5 wt% Al, between 2.8 and 3.6 wt% Ta, between 0.015 and 0.025 wt% C, between 0.04 and 0.07 wt% Zr, between 0.25 and 0.4 wt% Hf, between 0.07 and 0.13 wt% Si, and between 0.05 and 0.15 wt% (La+Y), at least 0.02 La, at least 0.02 Y.

In a preferred embodiment called STAL185W1, the alloy may include about 5.0 wt% Co, about 18.5 wt% Cr, about 1.6 wt% W, about 5.3 wt% Al, about 3.2 wt% Ta, about 0.02 wt% C, about 0.05 wt% Zr, about 0.3 wt% Hf, about 0.1 wt% Si, about 0.05 wt% Y and about 0.05 wt% La.

Alternatively, the alloy may include between 2 and 8 wt% Co, between 17 and 19 wt% Cr, between 1 and 2.2 wt% W, between 4.8 and 5.8 wt% Al, between 2 and 4.5 wt% Ta, between 0.01 and 0.1 wt% of C+B, between 0.02 and 0.08 wt% Zr, between 0.1 and 0.5 wt% Hf, between 0.05 and 0.4 wt% Si, and between 0.05 and 0.5 wt% of the sum of rare earths, at most 0.3 of any rare earth, and Y present only as unavoidable impurity.

Additionally, the alloy may include between 4.5 and 5.5 wt% Co, between 18.2 and 19 wt% Cr, between 1.4 and 1.8 wt% W, between 5.2 and 5.5 wt% Al, between 2.8 and 3.6 wt% Ta, between 0.015 and 0.025 wt% C, between 0.04 and 0.07 wt% Zr, between 0.25 and 0.4 wt% Hf, between 0.07 and 0.13 wt% Si, and between 0.05 and 0.5 wt% of the sum of Ce+Gd, at least 0.02 wt% Ce, at least 0.02 wt% Gd, and at most 0.3 wt% of Gd or Ce.

In a preferred embodiment called STAL185W2, the alloy may include about 5 wt% Co, about 18.5 wt% Cr, about 1.6 wt% W, about 5.3 wt% Al, about 3.2 wt% Ta, about 0.02 wt% C, about 0.05 wt% Zr, about 0.3 wt% Hf, about 0.1 wt% Si, about 0.05 wt% Ce and about 0.05 wt% Gd.

Alternatively, the alloy may include between 2 and 8 wt% Co, between 17 and 19 wt% Cr, between 0.5 and 1.5 wt% Mo, between 4.8 and 5.8 wt% Al, between 2 and 4.5 wt% Ta, between 0.01 and 0.1 wt% of C+B, between 0.02 and 0.08 wt% Zr, between 0.1 and 0.5 wt% Hf, between 0.05 and 0.4 wt% Si, and between 0.02 and 0.2 wt% of the sum of rare earths of which at least two are present in the alloy.

Additionally, the alloy may include, measured in wt%, between 4.5 and 5.5 wt% Co, between 18.2 and 19 wt% Cr, between 0.8 and 1.2 wt% Mo, between 5.2 and 5.5 wt% Al, between 2.8 and 3.6 wt% Ta, between 0.015 and 0.025 wt% C, between 0.04 and 0.07 wt% Zr, between 0.25 and 0.4 wt% Hf, between 0.07 and 0.13 wt% Si, and between 0.05 and 0.15 wt% (La+Y), at least 0.02 wt% La, at least 0.02 wt% Y.

In a preferred embodiment called STAL185Mol, the alloy may include about 5.3 wt% Co, about 18.5 wt% Cr, about 1.0 wt% Mo, about 5.3 wt% Al, about 3.2 wt% Ta, about 0.02 wt% C, about 0.05 wt% Zr, about 0.3 wt% Hf, about 0.1 wt% Si, about 0.05 wt% Y and about 0.05 wt% La.

Alternatively, the ally may include between 2 and 8 wt% Co, between 17 and 19 wt% Cr, between 0.5 and 1.5 wt% Mo, between 4.8 and 5.8 wt% Al, between 2 and 4.5 wt% Ta, between 0.01 and 0.1 wt% of C+B, between 0.02 and 0.08 wt% Zr, between 0.1 and 0.5 wt% Hf, between 0.05 and 0.4 wt% Si, and between 0.02 and 0.5 wt% of the sum of rare earths of which at least two are present in the alloy, at most 0.3 wt% of any rare earth, and Y present only as an unavoidable impurity.

Additionally, the alloy may include, measured in wt%, between 4.8 and 5.8 wt% Co, between 18.2 and 19 wt% Cr, between 0.8 and 1.2 wt% Mo, between 5.2 and 5.5 wt% Al, between 2.8 and 3.6 wt% Ta, between 0.015 and 0.025 wt% C, between 0.04 and 0.07 wt% Zr, between 0.25 and 0.4 wt% Hf, between 0.07 and 0.13 wt% Si, and between 0.05 and 0.5 wt% (Ce+Gd), at least 0.02 wt% Ce, at least 0.02 wt% Gd, at most 0.3 wt% Ce or Gd.

In a preferred embodiment called STAL185Mo2, the alloy may include about 5.3 wt% Co, about 18.5 wt% Cr, about 1.0 wt% Mo, about 5.3 wt% Al, about 3.2 wt% Ta, about 0.02 wt% C, about 0.05 wt% Zr, about 0.3 wt% Hf, about 0.1 wt% Si, about 0.05 wt% Ce and about 0.05 wt% Gd.

Alternatively, for increased hot corrosion resistance, the alloy may include, measured in wt%, between 2 and 8 wt% Co, between 20 and 21 wt% Cr, between 0.5 and 1.5 wt% W, between 4.7 and 5.3 wt% Al, between 1.5 and 2.5 wt% Ta, between 0.01 and 0.1 wt% of C+B, between 0.02 and 0.08 wt% Zr, between 0.1 and 0.5 wt% Hf, between 0.1 and 0.7 wt% Si, and between 0.02 and 0.2 wt% of the sum of rare earths of which at least two are present in the alloy.

Additionally, the alloy may include, measured in wt%, between 4.5 and 5.5 wt% Co, between 20.2 and 21.8 wt% Cr, between 0.8 and 1.2 wt% W, between 4.8 and 5.2 wt% Al, between 1.8 and 2.2 wt% Ta, between 0.015 and 0.025 wt% C, between 0.04 and 0.07 wt% Zr, between 0.25 and 0.4 wt% Hf, between 0.3 and 0.5 wt% Si, and between 0.05 and 0.15 wt% (La+Y), at least 0.02 wt% La, at least 0.02 wt% Y.

In a preferred embodiment called STAL205W1, the alloy may include about 5 wt% Co, about 20.5 wt% Cr, about 1 wt% W, about 5 wt% Al, about 2 wt% Ta, about 0.02 wt% C, about 0.05 wt% Zr, about 0.3 wt% Hf, about 0.4 wt% Si, about 0.05 wt% Y and about 0.05 wt% La.

Alternatively, the alloy may include between 2 and 8 wt% Co, between 20 and 21 wt% Cr, between 0.5 and 1.5 wt% W, between 4.7 and 5.3 wt% Al, between 1.5 and 2.5 wt% Ta, between 0.01 and 0.1 wt% of C+B, between 0.02 and 0.08 wt% Zr, between 0.1 and 0.5 wt% Hf, between 0.1 and 0.7 wt% Si, between 0.02 and 0.5 wt% of the sum of rare earths such that at least two rare earths are present in the alloy, Y present only as an unavoidable impurity, at most 0.3 wt% of any rare earth.

Additionally, the alloy may include, measured in wt%, between 4.5 and 5.5 wt% Co, between 20.2 and 20.8 wt% Cr, between 0.8 and 1.2 wt% W, between 4.8 and 5.2 wt% Al, between 1.8 and 2.2 wt% Ta, between 0.015 and 0.025 wt% C, between 0.04 and 0.07 wt% Zr, between 0.25 and 0.4 wt% Hf, between 0.3 and 0.5 wt% Si, and between 0.05 and 0.5 wt% (Ce+Gd), at least 0.02 wt% Ce, and at least 0.02 wt% Gd, at most 0.3 wt% Ce or Gd.

In a preferred embodiment called STAL205W2, the alloy may include about 5 wt% Co, about 20.5 wt% Cr, about 1 wt% W, about 5 wt% Al, about 2 wt% Ta, about 0.02 wt% C, about 0.05 wt% Zr, about 0.3 wt% Hf, about 0.4 wt% Si, about 0.05 wt% Ce and about 0.05 wt% Gd.

Using our in-house alloy design system, we calculate a γ' particle content of 45 vol%, and a Md value of 0.9580 for STAL185W1 and the figures are similar for STAL185W2, STAL185Mo1 and STAL185Mo2. For STAL205 we calculate a γ' particle content of about 41 vol% and a Md value of 0.9563. For comparison, we calculate a γ' particle content of 43 vol% and a Md value of 0.9818 for IN738LC. All particle contents relate to a reference temperature of 900 degree Celsius. These values indicate comparatively good alloy stability and weldability.

The superalloy according to the invention should be processed with a clean production process to produce an alloy with at most 10ppmw S, preferably less than 2 ppmw S. Additionally, each part of a complex material system in which the superalloys according to the invention is included should be processed with a clean production process which results in at most 10 ppmw S, preferably less than 2 ppmw S.

We do not expect any of the embodiments above to be optimal for all materials systems and conditions of interest within the scope of the present invention. Mo will e.g. reduce the solvus temperature whereas W increases it, and while the difference in may only be a few degree Celsius, this might enable or prevent a heat treatment aimed at one of the alloys within a complex material system. The choice of reactive elements may need to be adjusted to the reactive elements used in other alloys in a complex material system. Consequently, more than one embodiment is needed, and further embodiments can be designed to optimize compatibility with e.g. specific base alloys or for specific corrosive environments.

### Comparison with state-of-the-art

If we make a restriction to alloys forming Al2O3 scales, the class of classical alloys similar to IN939, IN738LC and IN792 is excluded.

If we further make a restriction to alloys with at least 16 wt% Cr for good corrosion resistance, the class of alloys similar to CMSX-4 and Rene N5 is excluded.

If we further make a restriction to alloys with at most 2 wt% Mo to avoid degradation of the corrosion resistance, the class of old alloys similar to U-700 is excluded.

If we further make a restriction to alloys with good ductility, all β phase based alloys are excluded.

If we further make a restriction to alloys having at least two wt% of the sum of matrix strengthening elements like Mo, W and Re, and, particle strengthening elements like Ti, Ta, Nb and V, alloys such as Haynes 214 are excluded.

If we further make a restriction to alloys which do not contain noble elements or elements such as Re and Ru, the class of Pt containing γ/γ' coating alloys as well as some novel Re and Re+Ru strengthened coating alloys are excluded.

If we further make a restriction to alloys with good weldability, high strength alloys such as the alloy disclosed in EP20060021724 are excluded.

If we further make a restriction to alloys with good alloy stability, alloys such as SV-20 are excluded.

Patent application 2008P02248WO is in many ways similar to the present invention. The difference is that it has less Al than in the invention, and therefore less margin against loss of Al in a complex material system before it starts to loose it's initially good to excellent oxidation resistance.

### References

[Barrett] C.A.Barrett A Statistical Analysis of Elevated Temperature Gravimetric Cyclic Oxidation Data of 36 Ni- and Co- base Superalloys based on an Oxidation Attack Parameter NASA TM 105934
[Sarioglu] C.Sarioglu, et al. The Control of Sulfur Content in Nickel-Base Single Crystal Superalloys and its Effect on Cyclic Oxidation Resistance Proceedings 'Superalloys 1996'
[Pint 1] B.A.Pint et al Effect of Cycle Frequency on High-Temperature Oxidation Behavior of Alumina- and Chromia-Forming Alloys Oxidation of Metals, 58 (1/2), 73-101 (2002)
[Harris] K.Harris et al. Improved Performance CMSX-4 Alloy Turbine Blades Utilising PPM Levels of Lanthanum and Yttrium Proceedings 'Materials for Advanced Power Engineering, 5-7 October, 1998, Liege, Belgium'
[Pint 2] Progress in Understanding the Reactive Element Effect since the Whittle and Stringer Literature Review 'Proc. of the J. Stringer Symposium, November 2001'
[Caron 1] P.Caron et al. Improvement of the Cyclic Oxidation Behaviour of Uncoated Nickel Based Single Crystal Superalloys Proceedings 'Materials for Advanced Power Engineering 1994'
[Pint 3] B.A.Pint et al. The use of Two Reactive Elements to Optimize Oxidation Performance of Alumina-Forming Alloys Materials at High Temperature 20(3) 375-386, 2003
[Aimone] P.R.Aimone, R.L.McCormick The Effects of Yttrium and Sulphur on the Oxidation Resistance of an Advanced Single Crystal Nickel Base Superalloy Proceedings 'Superalloys 1992'
[Goldschmidt] D.Goldschmidt Single-Crystal Blades Proc. from Materials for Advanced Power Engineering 1994, Part I, p.661-674
[Caron 2] P.Caron High Gamma Prime Solvus New Generation Nickel-Based Superalloys for Single Crystal Turbine Blade Applications Proceedings 'Superalloys 2000'
[Yeh] Yeh et al. Development of Si-Bearing 4th Generation Ni-Base Single Crystal Superalloys Proceedings 'Superalloys 2008'
[Subramanian] R.Subramanian Advanced Multi-Functional Coatings for Land-Based Industrial Gas Turbines Proceedings 'ASME Turbo Expo 2008, Berlin, Germany, GT2008-51532'
[Zhang] Y.Zhang et al. A Platinum-Enriched γ+γ' Two-Phase Bond Coat on Ni-Based Superalloys Surface and Coatings Technology. Volume 200. Issues 5-6. 21 November 2005. Pp. 1259-1263
[Vedula] K.Vedula et al. Alloys based on NiAl for High Temperature Applications Proceedings 'High-Temperature Ordered Intermetallic Alloys, Vol. 39 Materials Research Society Symposia Proceedings, 1984'
[Tolpygo] V.K.Tolpygo Effect of Hf, Y and C in the underlying superalloy on the rumpling of diffusion aluminide coatings Acta Materialia, v 56, n 3, February, 2008, p 489-499
[Fujita] Y.Fujita et al. Laser Epitaxial Cladding of Ni-Base Single Crystal Superalloy Materials Science Forum, Vols. 580-582 (2008), pp. 67-70

## Claims

1. A nickel base γ/γ' superalloy comprising:
up to 20 wt% of the sum of of Co and Fe,
between 17 and 21 wt% Cr,
between 0.5 and 3 wt% of the sum of Mo and W,
at most 2 wt% Mo,
between 4.8 and 6 wt% Al,
between 1.5 and 5 wt% Ta,
between 0.01 and 0.2 wt% of the sum of of C and B,
between 0.01 and 0.2 wt% Zr,
between 0.05 and 1.5 wt% Hf,
between 0.05 and 1.0 wt% Si, and
between 0.01 and 0.5 wt% of the sum of rare earths such as Sc, Y, the lanthanides and the actinides of which at least two are present in the alloy, and at most 0.3 wt% of any rare earth.

2. A nickel base γ/γ' superalloy consisting of:
up to 20 wt% of the sum of of Co and Fe,
between 17 and 21 wt% Cr,
between 0.5 and 3 wt% of the sum of Mo and W,
at most 2 wt% Mo,
between 4.8 and 6 wt% Al,
between 1.5 and 5 wt% Ta,
between 0.01 and 0.2 wt% of the sum of of C and B,
between 0.01 and 0.2 wt% Zr,
between 0.05 and 1.5 wt% Hf,
between 0.05 and 1.0 wt% Si, and
between 0.01 and 0.5 wt% of the sum of rare earths such as Sc, Y, the lanthanides and the actinides of which at least two are present in the alloy, and at most 0.3 wt% of any rare earth, rest Ni and unavoidable impurities.

3. A nickel base γ/γ' superalloy according to claim 2 in which Y is present only as an unavoidable impurity.

4. A nickel base γ/γ' superalloy according to claim 2 comprising:
Between 4.5 and 5.5 wt% Co,
between 18.2 and 19 wt% Cr,
between 1.4 and 1.8 wt% W,
between 5.2 and 5.5 wt% Al,
between 2.8 and 3.6 wt% Ta,
between 0.015 and 0.025 wt% C,
between 0.04 and 0.07 wt% Zr,
between 0.25 and 0.4 wt% Hf,
between 0.07 and 0.13 wt% Si,
between 0.05 and 0.15 wt% of of the sum of La and Y, at least 0.02 wt% La, and at least 0.02 wt% Y.

5. A nickel base γ/γ' superalloy according to claim 3 comprising:
Between 4.5 and 5.5 wt% Co,
between 18.2 and 19 wt% Cr,
between 1.4 and 1.8 wt% W,
between 5.2 and 5.5 wt% Al,
between 2.8 and 3.6 wt% Ta,
between 0.015 and 0.025 wt% C,
between 0.04 and 0.07 wt% Zr,
between 0.25 and 0.4 wt% Hf,
between 0.07 and 0.13 wt% Si, and
between 0.05 and 0.5 wt% of the sum of rare earths, at most 0.3 of any rare earth, and La and Y present only as impurities.

6. A nickel base γ/γ' superalloy according to claim 5 comprising: about 5 wt% Co, about 18.5 wt% Cr, about 1.6 wt% W, about 5.3 wt% Al, about 3.2 wt% Ta, about 0.02 wt% C, about 0.05 wt% Zr, about 0.3 wt% Hf, about 0.1 wt% Si, about 0.05 wt% Ce and about 0.05 wt% Gd.

7. A nickel base γ/γ' superalloy according to claim 3 comprising:
Between 4.5 and 5.5 wt% Co,
between 18.2 and 19 wt% Cr,
between 0.8 and 1.2 wt% Mo,
between 5.2 and 5.5 wt% Al,
between 2.8 and 3.6 wt% Ta,
between 0.015 and 0.025 wt% C,
between 0.04 and 0.07 wt% Zr,
between 0.25 and 0.4 wt% Hf,
between 0.07 and 0.13 wt% Si, and
between 0.05 and 0.5 wt% of the sum of Ce and Gd, at least 0.02 wt% Ce, and at least 0.02 wt% Gd, at most 0.3 wt% of Ce or Gd.

8. A Nickel base γ/γ' superalloy according to claim 3 comprising:
Between 4.5 and 5.5 wt% Co,
between 20.2 and 20.8 wt% Cr,
between 0.8 and 1.2 wt% W,
between 4.8 and 5.2 wt% Al,
between 1.8 and 2.2 wt% Ta,
between 0.015 and 0.025 wt% C,
between 0.04 and 0.07 wt% Zr,
between 0.25 and 0.4 wt% Hf,
between 0.3 and 0.5 wt% Si,
between 0.05 and 0.5 wt% of the sum of rare earths, La and Y present only as impurities.

9. A Nickel base γ/γ' superalloy according to claim 15 comprising: About 5 wt% Co, about 20.5 wt% Cr, about 1 wt% W, about 5 wt% Al, about 2 wt% Ta, about 0.02 wt% C, about 0.05 wt% Zr, about 0.3 wt% Hf, about 0.4 wt% Si, about 0.05 wt% Ce and about 0.05 wt% Gd.

10. Component to be used in a hot environment, especially a blade, vane, heat shield, sealing or combustor part of a gas turbines, **characterized in that** at least a part of the component contains the Nickel base γ/γ' superalloy according to at least one of the claims (1)-(9).

11. Component according to claim 10 as filler alloy for repair welding of such hot components.

12. Component according to claim 10 as filler alloy for cladding of such hot components.

13. Component according to claim 10 as protective coating and/or bond coat in TBC systems on such hot components.

14. Component according to claim 10 in dual use as coating and/or bond coat in a TBC system, and, as filler alloy for repair welding on such hot components.

15. Component according to claim 10 in dual use as coating and/or bond coat in a TBC system, and, as filler alloy for cladding on such hot components.

16. Component according to at least on of the claims 10-12 as intermediate layer between the base alloy and a coating and/or a bond coat in a TBC system on such hot components.

17. Components according to at least one of the claims 10-16, wherein the the Nickel base γ/γ' superalloy is in equiaxed form.

18. Components according to at least one of the claims 10-16, wherein the the Nickel base γ/γ' superalloy is in directionally solidified form.

19. Components according to at least one of the claims 10-16, wherein the the Nickel base γ/γ' superalloy is in single crystal form.

20. Components according to at least one of the claims 10-19, wherein the the Nickel base γ/γ' superalloy is produced by a production process resulting in a S content below 10ppmw in the alloy.

21. Components according to claim 20, wherein the the Nickel base γ/γ' superalloy is produced by a production process in a S content below 2ppmw in the alloy.

22. Components according to claim 10-21, wherein the the Nickel base γ/γ' superalloy is part of a materials system with a production process resulting in a S content below 10 ppmw S in the materials system.

23. Component according to claim 22, wherein the materials system has a S content below 2 ppmw S.
